(19) Europäisches Patentamt
European Patent Office
Office européen des brevets

(11) **EP 4 815 364 A1**

(12) **EUROPEAN PATENT APPLICATION**


(43) Date of publication:
**30.09.2026 Bulletin 2026/40**

(21) Application number: **25167088.1**

(22) Date of filing: **28.03.2025**

(51) International Patent Classification (IPC):
***H04L 9/08** (2006.01)*

(52) Cooperative Patent Classification (CPC):
**H04L 9/085; G06F 21/31; H04L 9/0894;**
G06F 2221/2131

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**



(71) Applicants:
- **Deutsche Telekom AG**
  **53113 Bonn (DE)**
- **Technische Universität Berlin**
  **10623 Berlin (DE)**

(72) Inventors:
- **SOMMERWERK, Andreas**
  **10119 Berlin (DE)**
- **THATMANN, Dirk**
  **10781 Berlin (DE)**
- **SEGAT, Carlo**
  **10369 Berlin (DE)**

(74) Representative: **Vossius & Partner Patentanwälte Rechtsanwälte mbB**
**Siebertstraße 3**
**81675 München (DE)**


Remarks:
Amended claims in accordance with Rule 137(2) EPC.

(54) **METHOD AND SYSTEM FOR VERIFIABLE CREDENTIAL-BASED AUTHENTICATION IN A SECRET RECOVERY SYSTEM WITH A REISSUANCE SCHEME**


(57) The present disclosure relates to a method for distribution of a secret in a secret recovery system with a reissuance scheme based on at least one verifiable credential, VC, from a user to one or more trusted parties; a method for reconstruction of a secret in a secret recovery system with a reissuance scheme based on at least one verifiable credential from a user to one or more trusted parties; a method for re-issuance of a previously issued verified credential in a secret recovery system with a re-issuance scheme based on at least one verifiable credential for a user by an issuer; and corresponding systems, in which it is assumed that the user has lost the previously issued verified credential.


Fig. 6

S400
10
40
50
USER
ISSUER
Example VC
501
category: "driving_licence"
502
subject: "user_name"
504
[... other key-value pairs]
PREVIOUSLY ESTABLISHED SECURE CHANNEL IS ASSUMED
S401
Request VC issuance
S403
S402
Authentication and/or Authorization
S404
Issue VC
S600
51
USER LOSES THE VC or USER LOSES CONTROL OF THE IDENTIFIER "user_name"
Re-issued Example VC
511
category: "driving_licence"
512
subject: "new_user_name"
513
previous_subject: "user_name"
514
[... other key-value pairs]
S601
Request VC re-issuance
S602
Authentication and/or Authorization
S603
Reissue VC
S604


EP 4 815 364 A1

## Description

The present disclosure relates to a method and system for a verifiable credential-based authentication in a secret recovery system with a reissuance scheme.

In detail, the present disclosure relates to a method for distribution of a secret in a secret recovery system with a reissuance scheme based on at least one verifiable credential, VC, from a user to one or more trusted parties; a method for reconstruction of a secret in a secret recovery system with a reissuance scheme based on at least one verifiable credential from a user to one or more trusted parties; a method for re-issuance of a previously issued verified credential in a secret recovery system with a re-issuance scheme based on at least one verifiable credential for a user by an issuer; and corresponding systems, in which it is assumed that the user has lost the previously issued verified credential.

The following definitions will be used throughout the document. The definitions are presented in alphabetical order.

The defined terms pertain to Self-sovereign identity, Secret Sharing Schemes, and Secret Recovery Systems. Although a secret sharing scheme is a vital part of a secret recovery system, there is a difference in how the topics are treated in the literature.

On the one hand, some authors talk about Secret Schemes focusing on cryptographic and mathematical properties. On the other hand, others concern themselves with the operational aspects of Secret Recovery Systems, SRS, e.g., communication between the system entities, storage of the shares, access control during the recovery phase, etc.

For definitions about the theoretical aspects of secret sharing the journal article of reference [1] is taken as the authoritative source. When it comes to the operational aspects of secret sharing, a single and comprehensive authoritative source cannot be found. For this reason, several conference articles are considered: [2], [3].

Any one of the above or below discussed references, especially the definitions disclosed therein, are herewith incorporated by reference.

*Claim*

A (digital) assertion made about a subject [4]. For example, this can be a property of a subject like being a male or a female person.

*Dealer*

In a threshold secret sharing scheme, the owner of the secret or a trusted third party (known as the dealer) encodes the secret(s) into shares (or shadows) [1].

*Decentralized Identifier (DID)*

Decentralized identifiers, DIDs, are a new type of identifier that enables verifiable, decentralized digital identity. A DID refers to any subject (e.g., a person, organization, thing, data model, abstract entity, etc.) as determined by the controller of the DID.

In contrast to typical, federated identifiers, DIDs have been designed so that they may be decoupled from centralized registries, identity providers, and certificate authorities. Specifically, while other parties might be used to help enable the discovery of information related to a DID, the design enables the controller of a DID to prove control over it without requiring permission from any other party. DIDs are URIs that associate a DID subject with a DID document allowing trustable interactions associated with that subject [4].

*DID Document*

A set of data describing the DID subject, including mechanisms, such as cryptographic public keys, that the DID subject or a DID delegate can use to authenticate itself and prove its association with the DID [4].

*Decision Trust*

The extent to which one party is willing to depend on something or somebody in a given situation with a feeling of relative security, even though negative consequences are possible [5].

*DIF (Decentralized Identity Foundation) Presentation Exchange*

A common activity between peers in identity systems that feature the ability to generate self-asserted and third

party issued claims is the demand and submission of proofs from a Holder to a Verifier.

This flow implicitly requires the Holder and Verifier have a mechanism to facilitate the two primary steps in a proving exchange: a way for Verifiers to describe proof requirements, and for Holders to describe submissions of proof, which align with said requirements.

To address these needs, this DIF Presentation Exchange specification codifies a Presentation Definition data format Verifiers can use to articulate proof requirements, and a Presentation Submission data format Holders can use to describe proofs submitted in accordance with them, cf. [6].

*Distribution Phase*

In an SRS, the distribution phase is the communication process carried out by the dealer in which the shares are sent to the selected shareholders.

*High-Assurance Level Issuers (HALI)*

In the present disclosure, a high-assurance issuer is a VC issuer that enjoys a high-assurance level and is trusted by at least one of the trusted parties. Examples of high-assurance level issuers are government agencies and large corporations.

*Lagrange Interpolation*

Lagrange interpolation is a mathematical method used to construct a polynomial that passes through a given set of data points. Given t distinct data points (xi, yi), Lagrange interpolation produces a unique polynomial of degree at most t-1 that fits the given data.

*Public Key-based Identifier*

In the present disclosure, a public Key-based Identifier, or identifier in short, refers to any identifier that has a private-public key pair associated and that can only be used (e.g. to authenticate) by an entity controlling the private key.

*Recovery Phase*

In the present disclosure, the recovery phase refers to the communication and computational process that involves fetching a sufficient number of shares from the shareholders and combining them to reconstruct the secret.

*Recovery VC (Verifiable Credential)*

In the present disclosure, a recovery VC is a verifiable credential, issued by a High Assurance Level Issuers attesting some identity attributes of the "credentialSubject". For example, a national ID card issued in the form of a VC can be used as a recovery VC.

*Secret*

A piece of information that must remain private. Concrete examples are a private key, the serialized content of a digital wallet, a PIN code, etc....

*Secret Owner*

An entity controlling the secret. The secret owner carries out the splitting phase.

*Social Recovery*

An SRS that leverages social trust relationships as a mechanism for secure key management and recovery. In social recovery, the shareholders are individuals trusted by the secret owner. Often the communication between the secret owner and the shareholders happens out-of-band rather than according to strictly predefined methods.

*Secret Recovery System (SRS)*

In the present disclosure, a Secret Recovery System is the practical, operational implementation of a secret sharing scheme. An SRS can utilize various cryptographic techniques such as encryption, digital signatures, and biometric authentication to further enhance security and control over the recovery process.

*Secret Sharing, Secret Sharing Scheme, Threshold secret sharing (TSS)*

Consider the following problem. A dealer holds a secret $s \in \{0, 1\}^*$, say, a nuclear-launch code , that it wishes to share among some set of N users P1 , . . . , PN by giving each user a share. Any T users should be able to pool their shares and reconstruct the secret, but no coalition of fewer than T users should get any information about s from their collective shares (beyond whatever information they had about s already).

The present disclosure refers to such a sharing mechanism as a (T, N )-threshold secret-sharing scheme. Such a scheme ensures that s is not revealed without sufficient authorization, while also guaranteeing availability of s when needed (since any T users can reconstruct it) [7].

*Shamir Secret Sharing (SSS)*

A threshold secret sharing scheme based on polynomial interpolation. In this scheme, a secret is encoded as the constant term of a polynomial, and shares are generated by evaluating the polynomial at distinct, non-zero points. Any group of participants with a number of shares equal to or exceeding the threshold can use Lagrange interpolation to reconstruct the polynomial and recover the secret.

*Share*

A share is a piece of the secret generated in the splitting phase. See the definition of "Secret Sharing, Secret Sharing Scheme, Threshold secret sharing (TSS)".

*Shareholder*

In the present disclosure, a shareholder is an entity that receives a share from the dealer. A shareholder is responsible to store the share and send it back to the dealer when requested.

*Splitting Phase*

In the present disclosure, the splitting phase is the computational process taking the secret as input and generating a number of shares. The splitting phase is performed by the dealer.

*Trusted Party (TP)*

In the present disclosure, a trusted party is a shareholder which is not an individual but rather an organization. The trusted party is trusted by the secret owner according to the definition of trust offered by the decision trust model. An example for a trusted party are reputable companies, mobile network operators, universities, etc...

*User*

In the present disclosure, the user is preferably a human using the SRS to secure a secret they control. The user is therefore the same logical entity as the secret owner and the dealer.

*VC Reissuance*

In the present disclosure, VC Reissuance refers to the procedures and rules followed by a VC holder and an issuer in order to get a VC reissued. For example, if a user loses the VC associated with their driving license, they will contact the original issuer and initiate VC Reissuance to obtain a new and equivalent one.

*Verifiable Credential (VC)*

A set of one or more claims made by an issuer. A verifiable credential is a tamper-evident credential that has

authorship that can be cryptographically verified. Verifiable credentials can be used to build verifiable presentations, which can also be cryptographically verified. The claims in a credential can be about different subjects [7].

*VC Category*

A string appearing as a field at the top level of every VC used in the system and representing the category or equivalently the purpose of the VC. An example value would be *"driving_licence".* In practice, the field *"type"* (as detailed in the Verifiable Credentials Data Model v1.1) would preferably be used for this purpose.

*Verifiable Presentation (VP)*

Data derived from one or more verifiable credentials, issued by one or more issuers, that is shared with a specific verifier. A verifiable presentation is a tamper-evident presentation encoded in such a way that authorship of the data can be trusted after a process of cryptographic verification. Certain types of verifiable presentations might contain data that is synthesized from, but do not contain, the original verifiable credentials (for example, zero-knowledge proofs) [7].

To verify a VP, a verifier performs the following (it is noted that the order may vary depending on implementations. 1) check that the credential was issued by a valid issuer; 2) check that the issuer signature is cryptographically valid; 3) check revocation status of the credential; and 4) check that the holder signature is cryptographically valid.

The workflows and algorithms generally used by SRS are generally known to the skilled person. By surveying the literature, the following existing approaches to authentication during the recovery phase have been identified:

- Secret-based Authentication - authentication relies upon the user knowing a secret phrase or a PIN code.
- Associated Accounts - when setting up the SRS the user binds the secured secret to another account they control. At recovery time they can authenticate using the bound account.
- Authorization Tokens - the user receives a token after setting up the SRS. The token is used to initiate the recovery.
- Associated Physical Credentials - the authentication could take the form of a Know Your Customer (KYC) check where the user is asked to present documents such as Passports, National IDs or driving licenses.
- Bio-metrics - similar to how it would work with Associated Physical Credentials, biometrics could be used instead of a physical document.
- Social Recovery - if the trusted parties are selected among friends or family members then authentication could be performed out of band.

The above-mentioned methods have the following shortcomings: Passphrases, PINs and authorization tokens can be lost, effectively making recovery impossible. Access to an associated account may also be lost.

Furthermore, physical media has inherent vulnerabilities and inefficiencies in terms of both security and accessibility. Moreover, using physical documents would make the system not privacy-preserving by design.

Biometrics are not a secure solution as they can be impersonated. Moreover, they are not futureproof since body features are subject to change. With social recovery the shares are more likely to get lost and be unavailable when needed. Friends and family may not have the technical capabilities and incentives to store the secret shares for extended periods of time.

The above problems are among those solved by the present disclosure. The present disclosure is defined by the appended claims.

According to an aspect of the present disclosure, there is provided a method for distribution of a secret in a secret recovery system with a reissuance scheme based on at least one verifiable credential, VC, from a user (10) to one or more trusted parties, TP, (20)

wherein the VC (50) is issued by an issuer (40) and comprises at least first data and second data which is based on an identifier of the user (10);

wherein the method for distribution comprises the steps of:

A) the user (10) selecting a number of N TPs, wherein N is one or more;
B) the user (10) splitting the secret into N shares;
C) the user (10) providing at least one VC (50) as a recovery VC (50) to each of the N TPs;
D) the user (10) sending a respective one unique share to each respective of the N TPs (20); and
E) each of the N TPs (20) storing the respective share together with the VC specific first data, and the VC specific second data, for each of the at least one presented recovery VC (50), respectively.

According to an aspect of the present disclosure, there is provided a method for reissuance of a previously issued verified credential, VC, (50) in a secret recovery system with a reissuance scheme based on at least one verifiable

credential, VC for a user (10) by an issuer (40),

wherein the VC has been issued by the issuer (40) and comprises at least first data and second data which is based on an identifier of the user;
wherein the method for reissuance comprises the steps of:

the issuer (40) reissuing the VC (50) with a new second data based on a newly generated identifier, and
the issuer adding a third data to the reissued VC (51),
wherein the value of the third data of the reissued VC (51) is equal to the value of the second data of the previously issued VC (50).

According to an embodiment of the present disclosure, after step E) the TP (20) acknowledges the storage to the user (10); and preferably after successful storing in step E) the user (10) receives a digital receipt from the respective TP (20).

According to an aspect of the present disclosure, there is provided a method for reconstruction of a secret in a secret recovery system with a reissuance scheme based on at least one verifiable credential, VC, from a user (10) to one or more trusted parties, TP, (20),

wherein the VC (50, 51) is issued by an issuer (40) and comprises at least first data and second data based on an identifier of the user (10); and
wherein the secret has been distributed by a method according to any one of claims 1 to 3;
the method for reconstruction comprising the steps of:

i) the user (10) requesting each of the N TPs (20) to send the respective share;
ii) the user (10) presenting one of the at least one recovery VC (50,51);
iii) each respective one of the N TPs (20) authenticating the respective request based on one of the at least one presented recovery VCs (50, 51);
iv) upon positive authentication of the user (10) the respective TP (20) sending the respective share to the user (10); and
v) the user (10) combining the N shares into the secret;

wherein for positive authentication the TP (20) determines whether the second data of the presented VC (50,51) matches the stored second data of the VC (50); and
in case of no match the TP (50) determines whether the presented VC (51) comprises third data that matches the stored second data of the VC (50).

According to an embodiment of the present disclosure, the communication between the user (10), the N TPs (20), and/or the issuer (40) is performed via a secure communication channel, and
wherein the secure channel preferably is established based on a VC of the user (10) attesting the right to use the secret recovery system and/or a VC of the respective TP (20) or issuer (40) attesting the role of a shareholder.

According to an embodiment of the present disclosure, the VC (50,51) is data model according to W3C, wherein the first data, the second data, and/or the third data, respectively relate to credentials of the data model;

wherein preferably the VC (50, 51) is in the JavaScript Object Notation; JSON, format; and
wherein preferably the second data and/or the third data is comprised at the top-level in the VC's JSON structure.

According to an aspect of the present disclosure, there is provided a user device for a secret in a secret recovery system with a reissuance scheme based on at least one verifiable credential, VC, comprising means for performing the steps of a method according to any one of the above aspects and embodiments.

According to an aspect of the present disclosure, there is provided a trusted party device for a secret in a secret recovery system with a reissuance scheme based on at least one verifiable credential, VC, comprising means for performing the steps of a method according to any one of the above aspects and embodiments.

According to an aspect of the present disclosure, there is provided an issuer device for a secret in a secret recovery system with a reissuance scheme based on at least one verifiable credential, VC, comprising means for performing the steps of a method according to any one of the above aspects and embodiments.

According to an aspect of the present disclosure, there is provided a system comprising at least one of a user device, at least one trusted party device, and a least one issuer device according the above aspects.

According to an aspect of the present disclosure, there is provided a computer program comprising instructions

which, when the program is executed by a first computer, cause the first computer to performing the steps of a user in a method according to any one of the above aspects and embodiments.

According to an aspect of the present disclosure, there is provided a computer program comprising instructions which, when the program is executed by a second computer, cause the second computer to performing the steps of a trusted party in a method according to any one of the above aspects and embodiments.

According to an aspect of the present disclosure, there is provided a computer program comprising instructions which, when the program is executed by a third computer, cause the third computer to performing the steps of an issuer in a method according to any one of the above aspects and embodiments.

According to an aspect of the present disclosure, there is provided a computer-readable medium comprising instructions which, when executed by a computer, cause the computer to carry out the steps of a user, a trusted party, or an issuer in a method according to any one of the above aspects and embodiments.

Other aspects, features, and advantages will be apparent from the summary above, as well as from the description that follows, including the figures and the claims.

The present disclosure relates to an authentication method to be performed during the recovery phase of a secret recovery system, SRS. It also relates to the support of a VC re-issuance scheme.

According to a general concept of the present disclosure the operation of an SRS can be broken down into the following phases:

Splitting Phase: The user splits the secret into n shares using a secret sharing method. A preferable method is Shamir Secret Sharing (SSS).

Optionally, the user may encrypt the secret before splitting it. This would result in the shares being obfuscated, reducing the risks of collusion between shareholders.

Distribution Phase: The user distributes the shares to n trusted parties (TPs) of choice. They act as shareholders and store the share.

Recovery Phase: The user initiates the recovery phase, fetches the shares from the TPs and reconstructs the secret.

According to the present disclosure, an authentication method during the recovery phase is based on presentation of a recovery VC. Authentication in the recovery phase is paramount because the TP must determine if the request to get a share came from the original owner of the share.

Furthermore, the secret recovery system according to the present disclosure comprises support for a VC reissuance scheme in case the recovery VC is lost by the user.

The following example describes the operations of an SRS according to embodiments of the present disclosure.

A user, hereinafter referred to as Alice, holds significant amounts of a certain cryptocurrency on an account. To reduce the risk of being locked out from the funds, she secures the private key associated with the account using an SRS based on Shamir Secret Sharing.

In a splitting phase according to the present disclosure:

It is assumed that Alice runs a digital wallet holding VCs on a device under her control.

The secret is Alice's private key:

*AAAAB3NzaC1yc2EAAAADAQABAAABAxz1qopyKWqDryPXZoHs.*

Shamir Secret Sharing (SSS) with N=5, T=3 is used as the secret sharing scheme.

Optional Encryption: Alice encrypts the private key, preferably with AES-256 using biometric data, e.g. a fingerprint and or iris scans, as the key, for increased security. This encrypted key will be the input for SSS.

Share Generation: Alice uses SSS to generate 5 shares of the encrypted private key.

In practice, the concrete execution of SSS and the optional encryption step may be carried out on Alice's device either by a digital wallet software itself, or by a dedicated secret-sharing software.

That is, the embodiments of the present disclosure may be implemented in form of a single software entity or on a single device, or may be implemented in from of different software entities or different devices communicating with each other. Furthermore, any of the software according to the present disclosure may be distributed in a network.

In a distribution phase according to the present disclosure:

Alice selected one or more trusted parties, TPs, to share the secret. Preferably, Alice consults a publicly available list of TPs and selects a number of TPs, e.g., five TPs, that she trusts. For example:

1. Fraunhofer-Gesellschaft: A renowned research organization.

2. Deutsche Telekom: Germany's largest telecommunications company.
3. Allianz: A global financial services company.
4. Technical University of Munich (TUM): A leading technical university.
5. Bundesdruckerei: A government-owned security printing company responsible for producing German identity documents, banknotes, and other security-sensitive materials.

Alice needs to distribute the five shares generated in the previous step to these five trusted parties, i.e., each party preferably receives one unique share. The following process is repeated for each TP in a preferred embodiment: Optionally, before distributing the shares to the TPs Alice retrieves the TP's metadata information.

In practice, if DIDs are used, this would mean performing DID resolution and obtaining the corresponding DID document. Important metadata in the DID document include the TP's public keys, service endpoints and a list of HALIs the TP is trusting.

Optionally, a secure channel between Alice and the TP is established. In practice, Alice can establish a TLS session with the TP using the public key information and the service endpoints retrieved before.

Then, the secure channel is used to perform a two-way authorization step. On one hand, the TP proves that they are authorized to act as shareholders. On the other hand, Alice proves that they are allowed to use the SRS.

In practice, Alice can hold a VC attesting her right to use the SRS and the TP a VC attesting their role of shareholder. Authorization can be done by following the DID Presentation Exchange protocol.

It is noted that the VC attesting Alice's right to use the system is unrelated to the recovery VCs discussed elsewhere in the present disclosure.

Alice selects one recovery VCs accepted by the TP and presents it. Examples of recovery VCs are digital versions of Alice's driving license or her national ID card. Again, the DID Presentation Exchange protocol may be employed. A VC is accepted by a TP only if its issuer appears in the TP's list of HALIs.

It is noted that embodiments of the present disclosure allow Alice to perform this step for more than one recovery VC. The purpose of presenting more recovery VCs is flexibility: Alice will later be able to use any of the recovery VCs to initiate the recovery phase.

If the recovery VCs presentations are successful, Alice proceeds to send the share to the TP.

On the TP's side, the received share is securely stored. Importantly, the TP also records the VC category and "credentialSubject" information, saving the information together with the share.

In practice, if the received share is "1234567890abcdefghi", the "category" of the recovery VC is "driving_license" (also referred to as first data) and the "credentialSubject" (also referred to as second data) of the recovery VC is "did:example:alice", then the TP will securely store the following tuple:
*("1234567890abcdefghi", "driving license", "did:example:alice").*

If Alice presented two recovery VCs instead of one, and if the "category" of the second recovery VC was "national_id_card" then the TP would also store a second tuple:
*("1234567890abcdefghi", "national id card", "did:example:alice")*

It is noted that the data of the above VC's is similar for mere illustration purpose. In practice even the "did", i.e. second information may be different.

Optionally, upon storing the share, the TP produces a digital receipt confirming that the share was received and stored securely. This receipt is sent to Alice.

In a reconstruction phase according to the present disclosure:

It is assumed that at some point, Alice loses the private key and initiates the recovery phase to recover it.

For each of the TPs that were entrusted with a share, the following is performed until enough shares for reconstruction, e.g. in the above example T=3, shares are obtained.

Optionally, Alice uses a specific TP's endpoint to establish a secure channel. TP's endpoints and their purpose are known by retrieving metadata for the TP's identifier, as discussed above.

Alice requests the TP to send the share.

The TP authenticates Alice by asking to present at least one of the recovery VCs presented during the distribution phase. That is, preferably the corresponding DID presentation exchange protocol is employed.

If the recovery VC-based authentication is successful, then the TP sends the share to Alice.

Finally, Alice combines the shares to obtain the secret. In practice, this is preferably done by the same software used by Alice during the splitting phases.

Support for re-issuance according to the present disclosure:
It is assumed that Alice may lose her Recovery VC and therefore lose the ability to authenticate in the recovery phase. Losing a recovery VC is not a problem, if Alice has presented more than one recovery VC and one of which is still under her control.

According to embodiments of the present disclosure, losing a recovery VC is also not a problem, if Alice can get a VC of the same "category" (e.g. driving license) with the same "credential Subject".

Whether it is possible to reissue a VC with the same "credential Subject" depends on the identifier used to express it.

Conceptually, there are 2 options:

- The identifier is not public key-based and/or is under the issuer's control.
- The identifier is public key-based and under the user's control (i.e. self-sovereign)

In the first case, the issuer can generally re-issue a VC where the credential Subject information is identical to the lost one. However, this would not be possible, if the issuer lost the private key as well.

In the second case, is may not possible to issue a VC with the same "credentialSubject" as Alice may have lost the key associated with the previous "credentialSubject" identifier.

For this reason, VCs originally issued against self-sovereign, public key-based identifiers, must be reissued against a new, freshly generated identifier.

As discussed above, the embodiments of the present disclosure in general, allow reissuance of a VC against a freshly generated identifier, for whatever reason the re-issuance or a freshly generated identifier may be necessary.

In the prior art, the reissuance is a problem, because the TP won't accept the reissued VC during the recovery phase if the "credentialSubject" has changed. From the TP perspective, only a valid recovery VC with the same "credentialSubject" as the one received during the distribution phase is valid.

To preserve reissued VCs validity in the face of a changed "credentialSubject" identifier, the issuer's reissuance mechanism and the TP's authorization is adapted according to the present disclosure.

According to the present disclosure, an additional information is added to the VC, preferably in form of a custom property to the reissued VC. The value of the additional information (also referred to as third data) preferably is the "credentialSubject" of the lost VC.

In practice, this property could be called "previousCredentialSubject" and be included at the top-level inside the VC JSON structure.

If this is done, the recovery phase could complete successfully as the TP is able recognize the old "credentialSubject" and understand that the currently being presented recovery VC is a re-issued version of the presented recovery VC.

In practice, the details of how the issuer authenticates a user request to re-issue a VC is specific to the issuer and VC "category" and the skilled person is aware of different methods to implement the embodiments. An example for such authentication would be an online authentication with a physical driving license with a real person preferably following a randomized script.

Granted that the issuer supports VC re-issuance with explicit reference to the previous "credentialSubject" identifier as described above, the recovery phase from the TP perspective is modified as follows.

According to the present disclosure, during the recovery phase, the TP does not only considers "credentialSubject" of the VC. Instead, the TP also considers the additional information "previousCredentialSubject". If "previousCredentialSubject" matches with one of the credential Subjects in the recovery VCs initially presented during the distribution phase, then the TP releases the share.

## Brief Description of the Drawings

The disclosure will be further described with reference to the figures. Therein,

Fig. 1 shows a block diagram of the system according to an embodiment of the present disclosure,
Fig. 2a shows a first part of an overview of the method according to an embodiment of the present disclosure,
Fig. 2b shows a second part of the overview of the method according to the embodiment of Fig. 2a,
Fig. 3 shows an illustration of the authorization according to an embodiment pf the present disclosure,
Fig. 4 shows the presentation of a recovery VC according to an embodiment of the present disclosure,
Fig. 5 shows the share retrieval according to an embodiment of the present disclosure, and
Fig. 6 shows the issuance and reissuance of a VC according to an embodiment of the present disclosure.

## Detailed Description of the Drawings

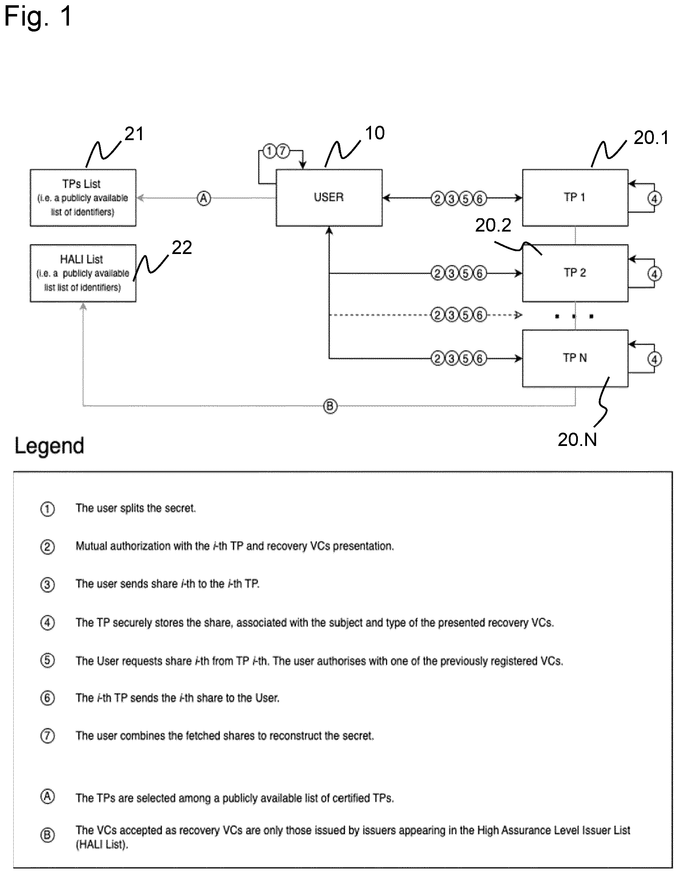

Fig. 1 shows a block diagram of the system according to an embodiment of the present disclosure. The system comprises a user 10 and a plurality of trusted parties, TP, 20.N.

It is noted that all embodiments are also completely operable with N=1, i.e., a one-to-one communication between one user and one trusted party.

The system also optionally comprises a TP list 21, i.e., a list of identifiers of the TPs, preferably this list is publicly

available.

Furthermore, the system also optionally comprises a HALI list 22, which is also preferably a publicly available list of identifiers. Alternatively, the HALI may be accessible only to the system participants.

The drawing illustrates the interactions between the units of the system according to an embodiment of the present disclosure. Each interaction is indicated by a circle with a letter or a number inside.

In step 1 the user 10 splits the secret into shares.

In step 2 mutual authorization with a selected i-th TP 20.i of the plurality of TP 20 is performed and at least one recovery VC is presented. The authorization is optional. The recovery VC presentation is essential.

In step 3 the user 10 sends the i-th share to the i-th TP 20.i.

In step 4 the each of the TP 20.1 to 20.N securely stores the share associated with the respective data, i.e., subject and type information, of the presented recovery VC. Preferably one or more VC, most preferably a plurality of VCs, are presented.

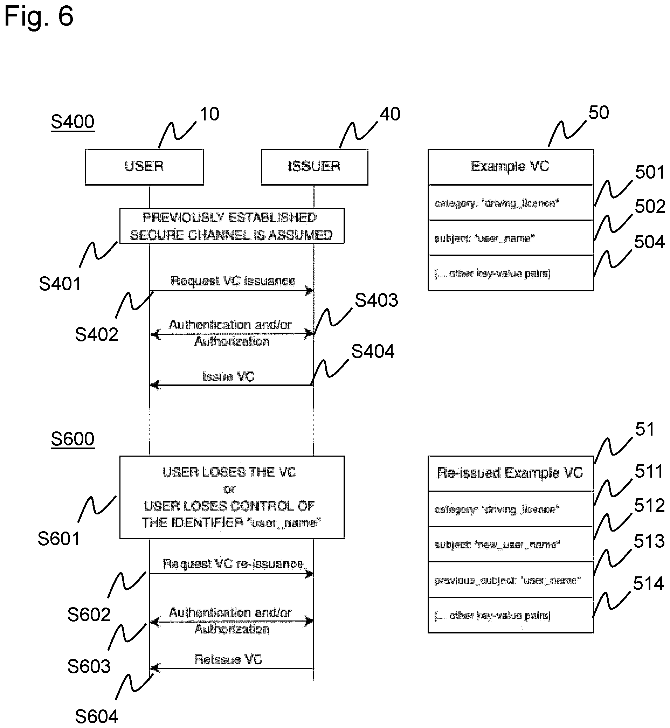

In step 5 the user 10 requests the i-th share from the i-th TP 20.i. The user 10 is authenticated, according to an embodiment of the present disclosure, based on a recovery VC and/or a reissued recovery VC, cf. Fig. 6.

In step 6 the i-th TP 20.i sends the i-th share to the user 10.

In step 7 the user 10 combines the fetched shares to reconstruct the secret. The skilled person is aware of different splitting and combination methods. Depending on the embodiment, the number of shares required for reconstruction may be less than the total number of shares. Furthermore, in a preferred embodiment encryption and corresponding decryption of the secret and/or the share may be performed at the users end and/or the TP's end.

In step A the TPs 20.i are selected among a list of TPs 21, preferably from a publicly available list of TPs 21.

In step B, in a preferred embodiment, the VC accepted as recovery VCs only those issued by issuers appearing in the High Assurance Level Issuer List, HALI list, 22. This is shown, e.g. in Fig. 6.

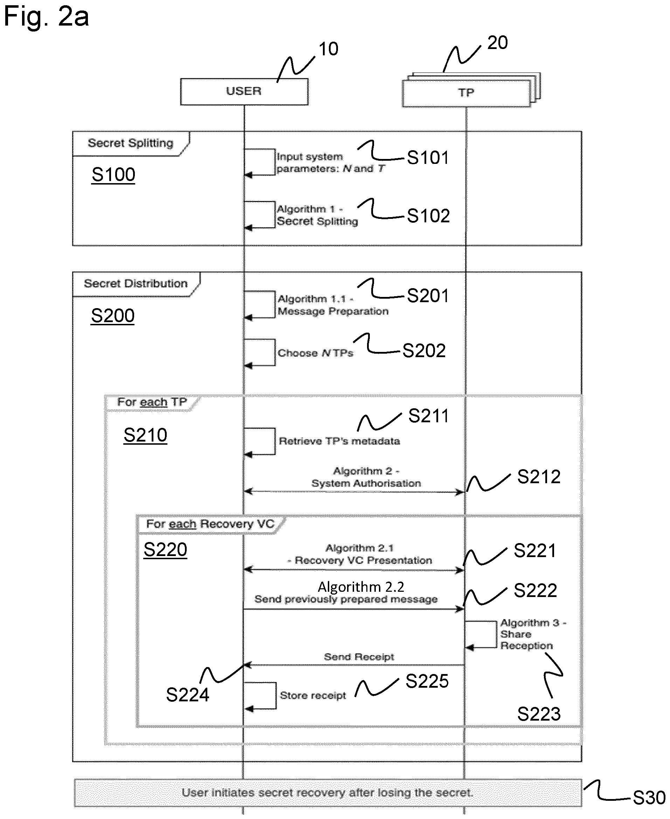

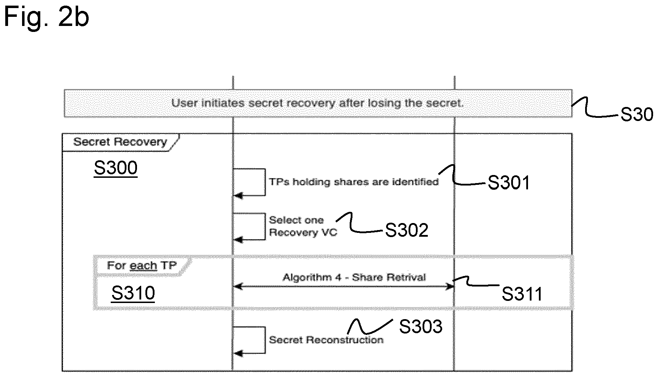

Fig. 2a shows a first part of an overview of the method according to an embodiment of the present disclosure. Fig. 2b shows a second part of the overview of the method according to the embodiment of the present disclosure. The drawings overlap in step S30, in which the user 10 initiates the secret recovery after losing the secret. In the following the combined drawing is discussed.

In the splitting phase S100 the user 10 uses a secret splitting algorithm in S102 to split a secret. It is noted that different implementations of the secret splitting may be used in different embodiments of the present disclosure. Depending upon the embodiment, different input parameters may be required to be input in step S101 to obtain shares of the secret.

The following quasi code illustrates an embodiment of the splitting algorithm indicated as "Algorithm 1" in Fig. 2a.

```
function performSecretSplitting(secret, n, t,
    symmetricKey):
     if(symmetricKey){
         secret = encrypt(secret, symmetricKey)
     }
     shares = applySSS(secret, n, t)
     return shares
```

In the distribution phase S200 the user 10 prepares a message in step S201. The following quasi code illustrates an embodiment of the message preparation indicated as "Algorithm 1.1" in Fig. 2a.

```
function prepareMessages(shares, recoveryVCs){
    messageSets = []
    for (recoveryVC of recoveryVCs){
        messagesPerRecoveryVC = []
        for (share of shares) {
            messagesPerRecoveryVC.append(
                {
                    "share": share,
                    "subject": recoveryVC.subject,
                    "category": recoveryVC.category,
                }
            )
        }
        messageSets.append(messagesPerRecoveryVC)
    }
    return messageSets
}
```

In step S202 the user 10 chooses N TPs 20, preferably from the above discussed list of TPs 21.

For each TP 20 the step S210 is individually performed. First, in a preferred embodiment, in step S211 the user 10 retrieves the TP's metadata, the metadata relates to information required to enable secure communication and/or establishing communication with the respective TP 20. In a preferred embodiment the metadata in the DID document includes one or more of the TP's public keys, service endpoints, and a list of HALIs the TP 20 is trusting.

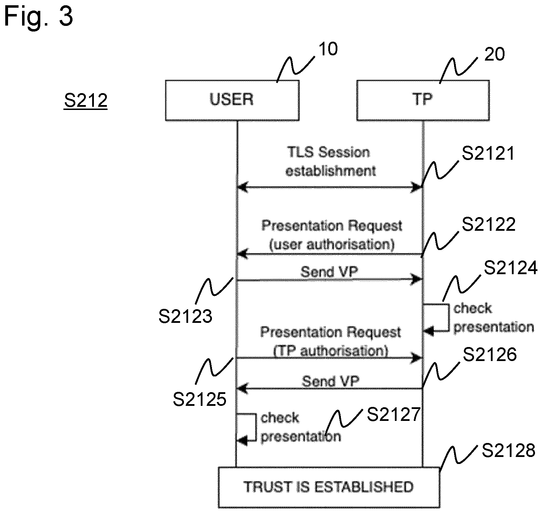

Then, in step S212, a system authorization is performed. Fig. 3 shows an illustration of the authorization according to an embodiment pf the present disclosure. This is method referred to as "Algorithm 2" in Fig. 2a.

To perform mutual authorization, the two parties 10 and 20 preferably establish a secure channel.

In practice, technical solutions may include protocols such as DIDComm or TLS. Both the user 10 and the TP 20 retrieve their own authorization material, e.g. a VC, from their respective wallet software.

Upon receiving each other's authorization material, e.g. a VP, both parties check its respective validity. The details of how the VCs are requested, presented, and checked are defined, e.g., in the DIF Presentation Exchange protocol, c.f. [6].

In more general terms, in a preferred embodiment of the present disclosure the step S212 comprises:

Step S2121 of establishing a TLS session between the user 10 and the TP 20.
Step S2122 of the TP 20 requesting the user 10 to authorize, preferably via a presentation of a VP.
Step S2123 of the user 10 sending a VP.
Step S2124 of the TP 20 checking the presentation.
Step S2125 of the user 10 requesting TP 20 authorization, preferably a presentation of a VP.
Step S2126 of the TP 20 sending a VP.
Step S2127 of the user 10 checking the VP.
Step S2128 of confirming established trust between the user 10 and the TP 20.

Now returning to Fig. 2a. Next, for each recovery VC, with the respective TP 20 the step S220 is performed. The step S220 comprises:

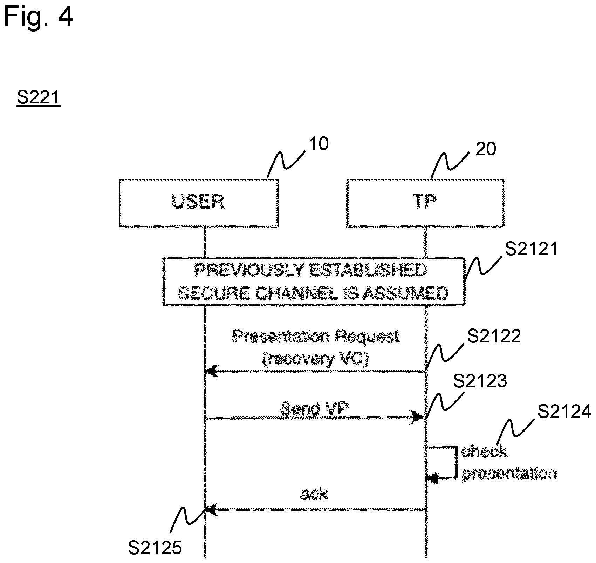

Step S221 of recovery VC presentation, which is discussed as "Algorithm 2.1" below and shown in Fig. 4.

Step S222 of sending the previously prepared message from the user 10 to the TP 20. The following quasi code illustrates an embodiment of the sending of the previously prepared message, i.e. "Algorithm 2.2" in Fig. 2a. The user 10 executes this code to send a share to a specific TP 20. If the user 10 has presented more than one recovery VC then a corresponding number of messages is sent to the TP 20.

```
function sendMessageToTP(messageSets, tps, tpIndex) {
  // one messageSet for each recovery VC presented
  for (messageSet of messageSets) {
    assert(messageSet.length == tps.length)
    sendShare(messageSet[tpIndex], tps[tpIndex])
  }
}
```

Step S223 of receiving the share at the TP 20. When a TP 20 receives a share, the TP 20 is responsible for storing it securely. Moreover, in a preferred embodiment the TP 20 produces a receipt confirming reception of the share and the commitment to keep storing it. The receipt is sent to the user 10.

The following quasi code illustrates an embodiment of share reception at the TP 20, i.e. "Algorithm 3" in Fig. 2a. The argument "session" is assumed to contain the information previously received by the TP 20 such as the recovery VC presentation. That is, reply attacks (i.e. attacker sends a previously sent share) are averted, because an attacker would need to do a present proof with a legitimate VC, which they do not control. In other words, somebody who cannot legitimately present a recovery VC cannot establish a valid "session" with the TP.

```
function onReceiveShare(message, session){
    assert(message.subject == session.recoveryVC.
        subject)
    assert(message.category == session.recoveryVC.
        category)

    store({
        message.share,
        message.subject,
        message.category
    })
    unsignedReceipt = {
        message.subject,
        TP.did // TP's did executing onReceiveShare
    }
    signedReceipt = {
        ...unsignedReceipt,
        sign(unsignedReceipt)
    }
    sendReceipt(signedReceipt)
}
```

Step S224, the TP 20 is sending a receipt to the user 10 and the user 10 is storing the receipt in step S225.

As discussed above, Fig. 4 shows the presentation of a recovery VC according to an embodiment of the present disclosure, i.e. step S221 as discussed above.

The step S221 of recovery VC presentation closely follows the approach of "Algorithm 2" as discussed above. However, the purpose of this presentation is for the TP 20 to ensure that the user 10 legitimately owns and controls a valid recovery VC.

In detail, it is assumed that a secure channel between the user 10 and the TP 20 has been established in step S2121, preferably the same channel as in the previous step(s) is used.

In step S2122 the TP 20 sends a presentation request for a recovery VC to the user 10. The user 10 uses a valid

recovery VC to derive a VP to the TP 20 in step S2123. The TP 20 checks the presentation in step S2124 and in case of a positive result the presentation is acknowledged in step S2125.

Now returning to Fig. 2a. The step S210 is repeated for each TP and the step S220 is repeated for each VC with each TP 20. After the share has been send to all TPs and the corresponding receipts have been received, the distribution phase according to an embodiment of the present disclosure is complete.

In step S30 the user 10 initiates the secret recovery, e.g. after losing the secret. That is, the secret recovery phase S300 according to an embodiment of the present disclosure is started. Fig. 2b shows a second part, i.e. the secret recovery phase, of the overview of the method according to an embodiment of the present disclosure.

In step S301 the user 10 identifies the TPs 20 holding the shares and in Step S302 the user 10 selects one recovery VC.

It is noted that the above discussed embodiments of the method may have the following error scenarios: a) a user may forget what TPs was entrusted, or b) a TP may no longer operational.

Scenario a) may be addressed by the user consulting the public list of TPs and trying to ask each of them. In other words, preferred embodiments are configured to tolerate a legitimate user of the SRS asking a "wrong" TP for a share.

Scenario a) may be addressed by choosing N much larger than T. Moreover, it can also be addressed by introducing a delegation mechanism between TPs.

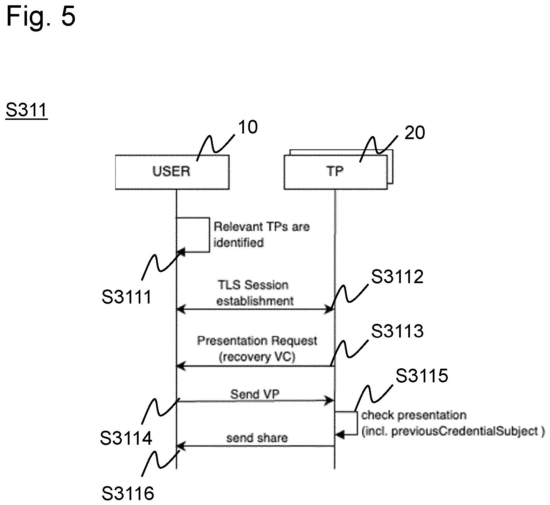

For each of the TP 20 the share retrieval step S310 is performed. This step the share is retrieved in step S311, which is indicated as "Algorithm 4" in Fig. 2b and shown in detail in Fig. 5.

After a sufficient number of shares has been retrieved by repeating S310 for each TP in step S303 the user 10 reconstructs the secret.

As discussed above, Fig. 5 shows the share retrieval according to an embodiment of the present disclosure.

In step S3111 the user 10 identifies a relevant TP 20.

In step S3112 a TLS session is establish with the TP 20 essentially the same way as discussed with respect to Fig. 3.

In step S3113 the TP 20 requests a presentation from the user 10, i.e. requests a recovery VC.

In step S3114 the user 10 sends the VP, i.e., the recovery VC, to the TP 20.

In step S3115 the TP20 checks the presentation. That is, the recovery VC is checked. In detail, the TP 20 determines whether the presentation matches the stored recovery VC information, including VC category information and VC credential subject information.

In case to match is determined, i.e. no stored share is matched against the presented recovery VC subject, the TP 20 also checks the whether the previous credential subject information matches with the stored recovery VC information, i.e. a stored VC credential subject information.

The following quasi code illustrates an embodiment of a TP receiving a request to release a share from the user.

```
function onRetriveShare(session){
    userVP = await sendVPRequest(session.user)
    checkUserVP(userVP, session)
    share = retriveShare(userVP.subject, userVP.
        category)
    if(share == null && userVP.
        previousCredentialSubject != null){
         share = retriveShare(userVP.
             previousCredentialSubject, userVP.category)
    }
    reutrn share
}
```

In case of a positive authorization of the user 10, and preferably other criteria being met, the VP is considered valid and the TP 20 sends the share to the user 10 in step S3116.

It is noted, that in practice the VP may be considered valid when a issuer signature, and/or a holder proof are valid, and/or the VC status is not revoked, and a matching share is found.

Fig. 6 shows the issuance and reissuance of a VC according to an embodiment of the present disclosure. That is, in S400 the issuance of a VC 50 from an issuer 40 to a user 10 is shown; and in S500 the reissuance of a VC 51 from the issuer 40 to the user 10 is shown. Furthermore, a representation of the structure of an example VC 50 and a reissued example VC 51 is shown.

In S400, optionally, a previously established secure channel is used S401 for communication between the user 10 and the issuer 40.

The user 10 requests a VC issuance from the issuer 40 in step S402. In S403 the issuer 40 authenticates and/or authorizes the user 10. In a preferred embodiment the authentication and/or authorization is based on a combination of public and private keys. In case of positive authentication and/or authorization the VC 50 is issued in step 404.

That is, the issuer generates a VC 50 based on an identifier provided by the user. **In** a preferred embodiment the generation comprises linking the VC 50 to a public/ private key pair controlled by user, e.g. a human or a machine.

The generated VC 50, according to an embodiment of the present disclosure, comprises at least a first data 501 and second data 502. Optionally, the VC 50 comprises further data 504. The first data 501 preferably is related to the "category" discussed above. The second data is preferably related to the user identifier.

According to the present disclosure, the user may lose the VC and/or lose control over the identifier the VC 50 is based upon S601. The embodiments of the present disclosure allow for reissuance of the VC 50 S600 and for subsequent retrieval of the secret based on the reissued VC 51. Thus, the embodiments of the present disclosure allow for retrieval of the secret although the VC has been reissued.

Again, optionally a secure channel may be used for communication between the user 10 and the issuer 40. The issuer 40 for reissuing is the same issuer 40, which has issued the VC 50.

In step S602 the user 10 request VC reissuance from the issuer 40. In S602 the issuer 40 performs authentication and/or authorization of the user 10. In case of positive authentication and/or authorization the issuer 40 reissues the VC 51 to the user 10.

In case when the identifier is under the user's control, that is, the user is able to present the identifier to the issuer 40, the issuer may reissue the same VC 50 with the same second data based on the identifier presented by the user 10.

In case the user has lost the VC and the identifier is not under the user's control, then the user may present a newly generated identifier. That is, the issuer 40 authenticates the user 10 based on an alternative identification method. In case of positive authentication, the issuer generates a new VC 51 based on the newly generated identifier.

In case the user has lost the VC 50 and the identifier is under the user's control, that is, the user 10 may present the identifier and request a new VC. In this case that the issuer 40 is able to create the same VC 50 based on the same identifier.

It is noted that holding a VC alone, i.e. without also controlling the associated identifier, would not allow for reissuance nor retrieval of the secret in any of the embodiments of the present disclosure.

In case the user has not lost the VC and the identifier is not under the user's control, the user10 can not be authenticated based on the old identifier. That is, the user 10 may present a newly generated identifier. Thus, the issuer 40 has to authenticate the user based on an alternative identification method. In case of positive authentication, the issuer 40 generates a new VC 51 based on the newly generated identifier.

According to a preferred embodiment of the present disclosure, the reissued VC 51 comprises third data, wherein the value of the third data is equal to the value of the second data of the previously issued VC 50.

The generated reissued VC 51 according to the present disclosure comprises at least first data 511, second data 512, and third data 513. The value of the third data corresponds the second data of the original VC 50. Optionally the reissued VC 51 may comprise further data 514.

As discussed above, when authentication the of the user 10 is performed during the retrieval of the secret, the respective TP 20 according to the present disclosure determines whether the third data 513 of a reissued VC 51 corresponds to the second data 502 of a stored recovery VC.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure.

Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or

any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof.

The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## References

The following references have been used in the above disclosure to discuss prior art as well as to explain methods know to the skilled person. The content of said references, especially the definitions of methods disclosed therein, is

herewith incorporated by reference.

[1] A. K. Chattopadhyay, "Secret sharing: A comprehensive survey, taxonomy and applications," Computer Science Review, vol. 51, 2024.
[2] S. Reza, "Practical Key Recovery Model for Self-Sovereign Identity Based Digital Wallets," in 2019 IEEE Intl Conf on Dependable, Autonomic and Secure Computing, Intl Conf on Pervasive Intelligence and Computing, Intl Conf on Cloud and Big Data Computing, Intl Conf on Cyber Science and Technology Congress, Fukuoka, Japan, 2019.
[3] B. Foteini, "Recovering Lost Device-Bound Credentials," in Applied Cryptography and Network Security, New York, 2015.
[4] W3C, "Decentralized Identifiers (DIDs) v1.0," 19 07 2022. [Online]. Available: https://www.w3.org/TR/did-core/. [Accessed 3 12 2024].
[5] A. Jøsang, "A survey of trust and reputation systems for online service provision,," A survey of trust and reputation systems for online service provision,, vol. 43, no. 2, pp. 618-644, 2007.
[6] Decentralized Identity Foundation, "Presentation Exchange 2.X.X," [Online]. Available: https://identity.foundation/presentation-exchange/. [Accessed 3 12 2024].
[7] W3C, "Verifiable Credentials Data Model v1.1," 3 3 2022. [Online]. Available: https://www.w3.org/TR/vc-data-model/. [Accessed 3 12 2024].
[8] J. Katz and Y. Lindell, Introduction to Modern Cryptography, 2020.
[9] HTC Corporation, "Recovering your Vault," [Online]. Available: https://www.htcexodus.com/mea-en/support/exodus-one/howto/recovering-your-vault.html. [Accessed 3 12 2024].

**Claims**

1. A method for distribution of a secret in a secret recovery system with a reissuance scheme based on at least one verifiable credential, VC, from a user (10) to one or more trusted parties, TP, (20)
wherein the VC (50) is issued by an issuer (40) and comprises at least first data and second data which is based on an identifier of the user (10);
wherein the method for distribution comprises the steps of:

   A) the user (10) selecting a number of N TPs, wherein N is one or more;
   B) the user (10) splitting the secret into N shares;
   C) the user (10) providing at least one VC (50) as a recovery VC (50) to each of the N TPs;
   D) the user (10) sending a respective one unique share to each respective of the N TPs (20); and
   E) each of the N TPs (20) storing the respective share together with the VC specific first data, and the VC specific second data, for each of the at least one presented recovery VC (50), respectively.

2. A method for reissuance of a previously issued verified credential, VC, (50) in a secret recovery system with a reissuance scheme based on at least one verifiable credential, VC for a user (10) by an issuer (40),

   wherein the VC has been issued by the issuer (40) and comprises at least first data and second data which is based on an identifier of the user;
   wherein the method for reissuance comprises the steps of:

      the issuer (40) reissuing the VC (50) with a new second data based on a newly generated identifier, and the issuer adding a third data to the reissued VC (51),
      wherein the value of the third data of the reissued VC (51) is equal to the value of the second data of the previously issued VC (50).

3. The method according to any one of claims 1 or 2,

   wherein after step E) the TP (20) acknowledges the storage to the user (10); and
   wherein preferably after successful storing in step E) the user (10) receives a digital receipt from the respective TP (20).

4. A method for reconstruction of a secret in a secret recovery system with a reissuance scheme based on at least one verifiable credential, VC, from a user (10) to one or more trusted parties, TP, (20),

wherein the VC (50, 51) is issued by an issuer (40) and comprises at least first data and second data based on an identifier of the user (10); and
wherein the secret has been distributed by a method according to any one of claims 1 to 3;
the method for reconstruction comprising the steps of:

i) the user (10) requesting each of the N TPs (20) to send the respective share;
ii) the user (10) presenting one of the at least one recovery VC (50,51);
iii) each respective one of the N TPs (20) authenticating the respective request based on one of the at least one presented recovery VCs (50, 51);
iv) upon positive authentication of the user (10) the respective TP (20) sending the respective share to the user (10); and
v) the user (10) combining the N shares into the secret;

wherein for positive authentication the TP (20) determines whether the second data of the presented VC (50,51) matches the stored second data of the VC (50); and
in case of no match the TP (50) determines whether the presented VC (51) comprises third data that matches the stored second data of the VC (50).

**5.** The method according to any one of claims 1 to 4,

wherein the communication between the user (10), the N TPs (20), and/or the issuer (40) is performed via a secure communication channel, and
wherein the secure channel preferably is established based on a VC of the user (10) attesting the right to use the secret recovery system and/or a VC of the respective TP (20) or issuer (40) attesting the role of a shareholder.

**6.** The method according to any one of claims 1 to 5,

wherein the VC (50,51) is data model according to W3C, wherein the first data, the second data, and/or the third data, respectively relate to credentials of the data model;
wherein preferably the VC (50, 51) is in the JavaScript Object Notation; JSON, format; and
wherein preferably the second data and/or the third data is comprised at the top-level in the VC's JSON structure.

**7.** A user device for a secret in a secret recovery system with a reissuance scheme based on at least one verifiable credential, VC, comprising means for performing the steps of a method according to any one of claims 1 to 6.

**8.** A trusted party device for a secret in a secret recovery system with a reissuance scheme based on at least one verifiable credential, VC, comprising means for performing the steps of a method according to any one of claims 1 to 6.

**9.** An issuer device for a secret in a secret recovery system with a reissuance scheme based on at least one verifiable credential, VC, comprising means for performing the steps of a method according to any one of claims 1 to 6.

**10.** A system comprising at least one of a user device according to claim 7, at least one trusted party device according to claim 8 and a least one issuer device according to claim 9.

**11.** A computer program comprising instructions which, when the program is executed by a first computer, cause the first computer to performing the steps of a user in a method according to any one of claims 1 to 6.

**12.** A computer program comprising instructions which, when the program is executed by a second computer, cause the second computer to performing the steps of a trusted party in a method according to any one of claims 1 to 6.

**13.** A computer program comprising instructions which, when the program is executed by a third computer, cause the third computer to performing the steps of an issuer in a method according to any one of claims 1 to 6.

**14.** A computer-readable medium comprising instructions which, when executed by a computer, cause the computer to carry out the steps of a user, a trusted party, or an issuer in a method according to any one of claims 1 to 6.

**Amended claims in accordance with Rule 137(2) EPC.**

1. A method for reconstruction of a secret in a secret recovery system with a reissuance scheme based on at least one verifiable credential, VC, from a user (10) to one or more trusted parties, TP, (20),

    wherein the VC (50, 51) is issued by an issuer (40) and comprises at least first data and second data based on an identifier of the user (10); and
    wherein the secret has been distributed by:

        A) the user (10) selecting a number of N TPs, wherein N is one or more;
        B) the user (10) splitting the secret into N shares;
        C) the user (10) providing at least one VC (50) as a recovery VC (50) to each of the N TPs;
        D) the user (10) sending a respective one unique share to each respective of the N TPs (20); and
        E) each of the N TPs (20) storing the respective share together with the VC specific first data, and the VC specific second data, for each of the at least one presented recovery VC (50), respectively;

    wherein the method for reconstruction comprising the steps of:

        i) the user (10) requesting each of the N TPs (20) to send the respective share;
        ii) the user (10) presenting one of the at least one recovery VC (50,51);
        iii) each respective one of the N TPs (20) authenticating the respective request based on one of the at least one presented recovery VCs (50, 51);
        iv) upon positive authentication of the user (10) the respective TP (20) sending the respective share to the user (10); and
        v) the user (10) combining the N shares into the secret;

    wherein for positive authentication the TP (20) determines whether the second data of the presented VC (50,51) matches the stored second data of the VC (50); and
    in case of no match the TP (50) determines whether the presented VC (51) comprises third data that matches the stored second data of the VC (50).

2. The method according to claim 1;
   wherein the method further comprises the steps of:

    the issuer (40) reissuing the VC (50) with a new second data based on a newly generated identifier, and
    the issuer adding a third data to the reissued VC (51),
    wherein the value of the third data of the reissued VC (51) is equal to the value of the second data of the previously issued VC (50).

3. The method according to any one of claims 1 or 2,

    wherein after step E) the TP (20) acknowledges the storage to the user (10); and
    wherein preferably after successful storing in step E) the user (10) receives a digital receipt from the respective TP (20).

4. The method according to any one of claims 1 to 3,

    wherein the communication between the user (10), the N TPs (20), and/or the issuer (40) is performed via a secure communication channel, and
    wherein the secure channel preferably is established based on a VC of the user (10) attesting the right to use the secret recovery system and/or a VC of the respective TP (20) or issuer (40) attesting the role of a shareholder.

5. The method according to any one of claims 1 to 4,

    wherein the VC (50,51) is data model according to W3C, wherein the first data, the second data, and/or the third data, respectively relate to credentials of the data model;
    wherein preferably the VC (50, 51) is in the JavaScript Object Notation; JSON, format; and
    wherein preferably the second data and/or the third data is comprised at the top-level in the VC's JSON structure.

6. A user device for a secret in a secret recovery system with a reissuance scheme based on at least one verifiable credential, VC, comprising means for performing the steps of a method according to any one of claims 1 to 5.

7. A trusted party device for a secret in a secret recovery system with a reissuance scheme based on at least one verifiable credential, VC, comprising means for performing the steps of a method according to any one of claims 1 to 5.

8. An issuer device for a secret in a secret recovery system with a reissuance scheme based on at least one verifiable credential, VC, comprising means for performing the steps of a method according to any one of claims 1 to 5.

9. A system comprising at least one of a user device according to claim 6, at least one trusted party device according to claim 7 and a least one issuer device according to claim 8.

10. A computer program comprising instructions which, when the program is executed by a first computer, cause the first computer to performing the steps of a user in a method according to any one of claims 1 to 5.

11. A computer program comprising instructions which, when the program is executed by a second computer, cause the second computer to performing the steps of a trusted party in a method according to any one of claims 1 to 5.

12. A computer program comprising instructions which, when the program is executed by a third computer, cause the third computer to performing the steps of an issuer in a method according to any one of claims 1 to 5.

13. A computer-readable medium comprising instructions which, when executed by a computer, cause the computer to carry out the steps of a user, a trusted party, or an issuer in a method according to any one of claims 1 to 5.

Fig. 1

21
10
20.1
TPs List
(i.e. a publicly available list of identifiers)
USER
TP 1
20.2
22
HALI List
(i.e. a publicly available list list of identifiers)
TP 2
TP N
20.N
A
B
1 7
2 3 5 6
4

## Legend

① The user splits the secret.

② Mutual authorization with the *i*-th TP and recovery VCs presentation.

③ The user sends share *i*-th to the *i*-th TP.

④ The TP securely stores the share, associated with the subject and type of the presented recovery VCs.

⑤ The User requests share *i*-th from TP *i*-th. The user authorises with one of the previously registered VCs.

⑥ The *i*-th TP sends the *i*-th share to the User.

⑦ The user combines the fetched shares to reconstruct the secret.

Ⓐ The TPs are selected among a publicly available list of certified TPs.

Ⓑ The VCs accepted as recovery VCs are only those issued by issuers appearing in the High Assurance Level Issuer List (HALI List).

Fig. 2a

10
20
USER
TP
Secret Splitting
S100
Input system parameters: N and T
S101
Algorithm 1 - Secret Splitting
S102
Secret Distribution
S200
Algorithm 1.1 - Message Preparation
S201
Choose N TPs
S202
For each TP
S210
S211
Retrieve TP's metadata
Algorithm 2 - System Authorisation
S212
For each Recovery VC
S220
Algorithm 2.1 - Recovery VC Presentation
S221
Algorithm 2.2
Send previously prepared message
S222
Algorithm 3 - Share Reception
Send Receipt
S224
Store receipt
S225
S223
User initiates secret recovery after losing the secret.
S30

Fig. 2b

User initiates secret recovery after losing the secret.
S30
Secret Recovery
S300
TPs holding shares are identified
S301
Select one
Recovery VC
S302
For each TP
S310
Algorithm 4 - Share Retrival
S311
S303
Secret Reconstruction

Fig. 3

S212
10
20
USER
TP
TLS Session establishment
S2121
Presentation Request (user authorisation)
S2122
Send VP
S2123
S2124
check presentation
Presentation Request (TP authorisation)
S2126
Send VP
S2125
check presentation
S2127
S2128
TRUST IS ESTABLISHED

Fig. 4

S221

10
20
USER
TP
S2121
PREVIOUSLY ESTABLISHED
SECURE CHANNEL IS ASSUMED
Presentation Request
(recovery VC)
S2122
S2123
Send VP
S2124
check
presentation
ack
S2125

Fig. 5

S311
10
20
USER
TP
Relevant TPs are identified
S3111
TLS Session establishment
S3112
Presentation Request (recovery VC)
S3113
S3115
Send VP
check presentation (incl. previousCredentialSubject )
S3114
send share
S3116

Fig. 6

S400
10
40
50
USER
ISSUER
Example VC
501
category: "driving_licence"
502
subject: "user_name"
504
[... other key-value pairs]
PREVIOUSLY ESTABLISHED
SECURE CHANNEL IS ASSUMED
S401
Request VC issuance
S403
S402
Authentication and/or
Authorization
S404
Issue VC
S600
51
USER LOSES THE VC
or
USER LOSES CONTROL OF
THE IDENTIFIER "user_name"
Re-issued Example VC
511
category: "driving_licence"
512
subject: "new_user_name"
513
previous_subject: "user_name"
514
[... other key-value pairs]
S601
Request VC re-issuance
S602
Authentication and/or
Authorization
S603
Reissue VC
S604

# EUROPEAN SEARCH REPORT

Application Number
EP 25 16 7088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/367778 A1 (HAMEL BJORN [US] ET AL) 25 November 2021 (2021-11-25) | 1,5-14 | INV. H04L9/08 |
| Y | * paragraphs [0016] - [0018]; figures 3,9 | 3 | |
| A | * | 2,4 | |
| Y | US 2023/050481 A1 (NAGARAJA VINJITH [US] ET AL) 16 February 2023 (2023-02-16) | 3 | |
| A | * paragraphs [0054], [0055] * | 4 | |
| X | KUSHCH SERGII ET AL: "Blockchain Tree as Solution for Distributed Storage of Personal ID Data and Document Access Control", SENSORS, vol. 20, no. 13, 27 June 2020 (2020-06-27), page 3621, XP093075541, DOI: 10.3390/s20133621 | 2 | |
| A | * table 2 * | 4 | |

TECHNICAL FIELDS SEARCHED (IPC)

H04L
G06F

The present search report has been drawn up for all claims

2

| Place of search | Date of completion of the search | Examiner |
|---|---|---|
| Munich | 5 September 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 16 7088

This annex lists the patent family members relating to the patent documents cited in the above-mentioned European search report. The members are as contained in the European Patent Office EDP file on
The European Patent Office is in no way liable for these particulars which are merely given for the purpose of information.

05-09-2025

| Patent document cited in search report | Publication date | Patent family member(s) | Publication date |
|---|---|---|---|
| US 2021367778 A1 | 25-11-2021 | EP 4154153 A1 | 29-03-2023 |
| | | US 2021367778 A1 | 25-11-2021 |
| | | WO 2021236196 A1 | 25-11-2021 |
| US 2023050481 A1 | 16-02-2023 | US 2023050481 A1 | 16-02-2023 |
| | | WO 2023009294 A1 | 02-02-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **A. K. CHATTOPADHYAY**. Secret sharing: A comprehensive survey, taxonomy and applications. *Computer Science Review*, 2024, vol. 51
- **S. REZA**. Practical Key Recovery Model for Self-Sovereign Identity Based Digital Wallets. *in 2019 IEEE Intl Conf on Dependable, Autonomic and Secure Computing, Intl Conf on Pervasive Intelligence and Computing, Intl Conf on Cloud and Big Data Computing, Intl Conf on Cyber Science and Technology Congress, Fukuoka, Japan*, 2019
- **B. FOTEINI**. Recovering Lost Device-Bound Credentials. *Applied Cryptography and Network Security, New York*, 2015
- Decentralized Identifiers (DIDs) v1.0. *W3C*, 19 July 2022, https://www.w3.org/TR/did-core
- **A. JØSANG**. A survey of trust and reputation systems for online service provision. *A survey of trust and reputation systems for online service provision*, 2007, vol. 43 (2), 618-644
- Presentation Exchange 2.X.X. *Decentralized Identity Foundation*, 03 December 2024, https://identity.foundation/presentation-exchange
- Verifiable Credentials Data Model v1.1. *W3C*, 03 March 2022, https://www.w3.org/TR/vc-data-model
- **J. KATZ** ; **Y. LINDELL**. *Introduction to Modern Cryptography*, 2020
- *Recovering your Vault*, 03 December 2024, https://www.htcexodus.com/mea-en/support/exodus-one/howto/recovering-your-vault.html